# EUROPEAN PATENT APPLICATION

(11) **EP 3 391 790 A1**
(43) Date of publication of application: **24.10.2018**
(21) Application number: 16875959.5
(22) Date of filing: 05.12.2016
(51) Int. Cl.: A47J 27/21, G01J 5/00

(54) **ELECTRIC POT PROVIDED WITH INFRARED TEMPERATURE SENSOR**

(30) Priority: 17.12.2015 KR 20150180912
(71) Applicant: Haenim Co., Ltd., Incheon 22743 (KR)
(72) Inventor: CHOI, Heung Bae, Incheon 22750 (KR)
(74) Representative: Rondano, Davide
(86) International application number: PCT/KR2016/014159
(87) International publication number: WO 2017/105017

(57) **Abstract**

An electric pot of the present invention includes: an electric pot body provided with a heating unit and a control unit controlling the heating unit, and having a guide tube on a top surface thereof; a container member inserted into the guide tube to be disposed at an upper portion of the electric pot body, and receiving heat from the heating unit; a temperature sensing unit installed at the electric pot body to sense a temperature of water filling the container member; and a display unit receiving a signal from the control unit to display the temperature of the water.

## Description

### TECHNICAL FIELD

The present invention relates to an electric pot provided with an infrared temperature sensor, and more particularly, to an electric pot provided with an infrared temperature sensor, wherein a container member is formed of transparent glass material, the infrared temperature sensor is provided at an electric pot body heating the container member, and a temperature of the container member is measured and controlled by the infrared temperature sensor, so that a temperature sensor does not need to be installed at the container member, thus facilitating dishwashing and cleaning, preventing the infiltration of foreign substances, and preventing harmful substances from remaining.

### BACKGROUND

As is well known, an electric kettle (generally referred to as an electric pot) is often used to boil coffee or tea in the office or home.

In general, the electric kettle is an apparatus that uses electric energy to boil water in a kettle to 100°C and keep the water warm. The electric kettle is becoming one of the daily necessities because it is convenient and non-dangerous for not having to use fire and can boil water in a short time.

As is known in the art, the electric kettle uses a bulk heater or a coil heater as a heating element for heating water. In general, a metal plate is located under a container of the electric kettle, and a heating element such as a bulk heater or a coil heater is provided under the metal plate to heat water by transmitting heat to the metal plate according to an energized state.

That is, since a temperature sensor (bimetal type) is interposed between electric circuits, when power is supplied after the electric kettle is filled with water, the temperature increases until the water is boiled, and thereafter, when the temperature of the water decreases below a predetermined temperature, power is resupplied by the temperature sensor to keep the water warm.

However, since a conventional electric kettle is unconditionally limited to only one temperature (i.e., 100° C) regardless of the user's intention, it cannot be set to a certain temperature desired by the user, thus failing to satisfy various demands of the user.

Thus, in order to improve this, "an electric pot capable of temperature setting" is disclosed in Korean Patent Publication No. 2000-0028440.

However, in the case of the disclosed improved technology, since design for control is complex, manufacturing cost increases; since a temperature sensor is set to directly contact and sense the heated water in order to measure the temperature or maintain the water at a predetermined temperature, heating and cooling are repeated and the temperature sensor is easily corroded or damaged by contacting the water; and since the temperature sensor is installed inside a container filled with water, it is inconvenient to clean.

Information disclosed in this Background Art section was already known to the inventors before achieving the present invention or is technical information acquired in the process of achieving the present invention. Therefore, it may contain information that does not form the prior art that is already known to the public in this country.

### DISCLOSURE OF THE INVENTION TECHNICAL PROBLEM

In order to solve the above conventional problems, the present invention provides an electric pot provided with an infrared temperature sensor, wherein a container member is formed of transparent glass material, the infrared temperature sensor is provided at an electric pot body heating the container member, and a temperature of the container member is measured and controlled by the infrared temperature sensor, so that a temperature sensor does not need to be installed at the container member, thus facilitating dishwashing and cleaning, preventing the infiltration of foreign substances, and preventing harmful substances from remaining.

### TECHNICAL SOLUTION

According to the present invention, an electric pot includes: an electric pot body provided with a heating unit and a control unit controlling the heating unit, and having a guide tube on a top surface thereof; a container member inserted into the guide tube to be disposed at an upper portion of the electric pot body, and receiving heat from the heating unit; a temperature sensing unit installed at the electric pot body to sense a temperature of water filling the container member; and a display unit receiving a signal from the control unit to display the temperature of the water.

Also, the container member may be formed of transparent glass material.

Also, the temperature sensing unit may be an infrared temperature sensor sensing the temperature of the water filling the container member and transmit a sense signal corresponding to the sensed temperature of the water to the control unit.

Also, the electric pot body may be further provided with a set temperature maintaining unit to maintain the boiled water at a set temperature, and after the water of the container member is boiled to 100°C, the set temperature maintaining unit may transmit an input water temperature setting value signal to the control unit to control the heating unit to maintain the water at the set temperature.

### ADVANTAGEOUS EFFECTS

According to the present invention, in an electric pot provided with an infrared temperature sensor, a container member is formed of transparent glass material, the infrared temperature sensor is provided at an electric pot body heating the container member, and a temperature of the container member is measured and controlled by the infrared temperature sensor, so that a temperature sensor does not need to be installed at the container member, thus facilitating dishwashing and cleaning, preventing the infiltration of foreign substances, and preventing harmful substances from remaining.

### BRIEF DESCRIPTION OF THE DRAWINGS

FIG. 1 is a front view of an electric pot provided with an infrared temperature sensor according to the present invention.
FIG. 2 is a diagram illustrating a driving concept of an electric pot provided with an infrared temperature sensor according to the present invention.
FIG. 3 is a conceptual diagram illustrating an electric pot provided with an infrared temperature sensor according to the present invention.
FIG. 4 is a diagram illustrating another embodiment of an electric pot provided with an infrared temperature sensor according to the present invention.

### DETAILED DESCRIPTION

Hereinafter, embodiments of an electric pot provided with an infrared temperature sensor according to the present invention will be described with reference to the accompanying drawings. Herein, thicknesses of lines or sizes of components in the drawings may be exaggerated for clarity and convenience of description. Also, the terms used herein are defined in consideration of functions in the present invention. Thus, the terms may vary depending on users' or operators' intentions or practices. Therefore, the terms used herein should be understood based on the overall descriptions made herein.

Also, the following embodiments are not intended to limit the scope of the present invention but are described just as examples, and there may be various other embodiments implemented by the inventive concept.

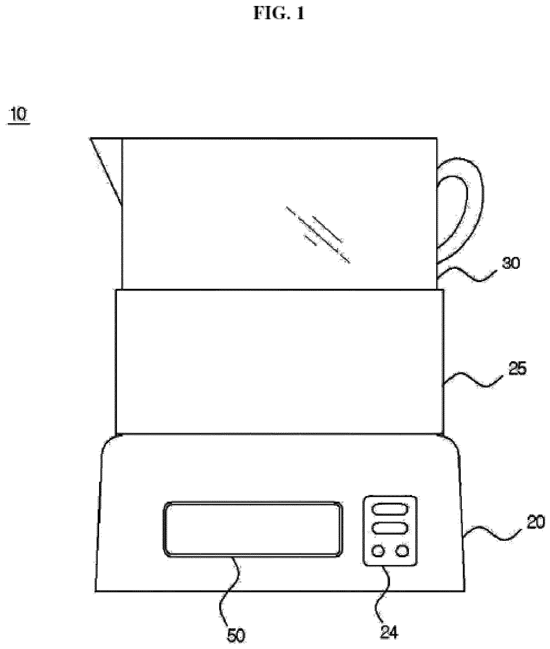

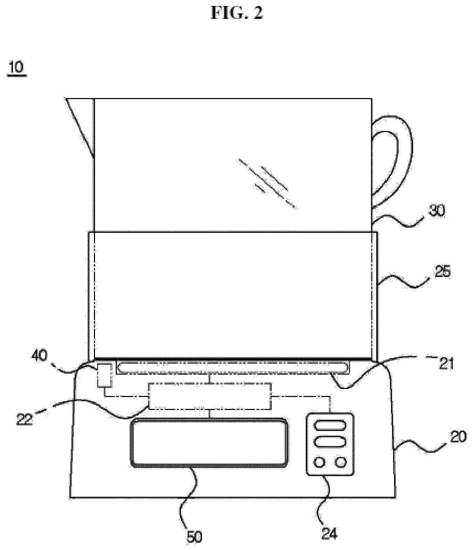

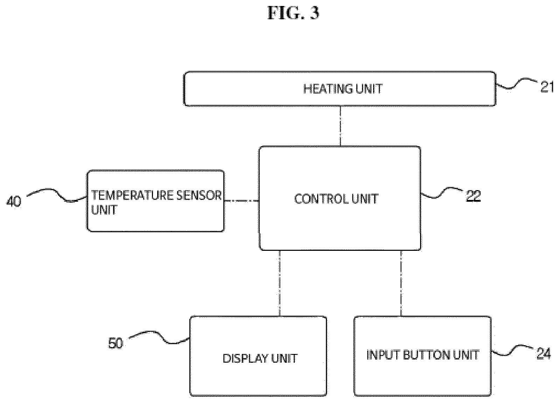

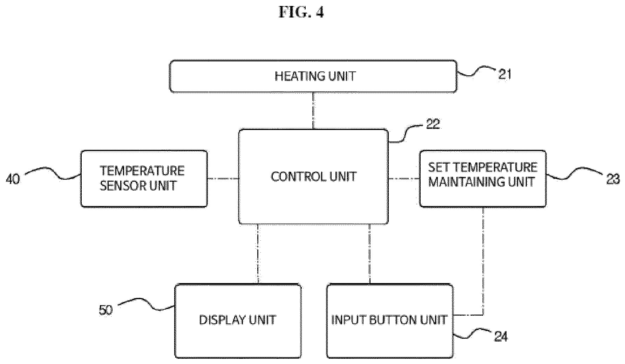

FIG. 1 is a front view of an electric pot provided with an infrared temperature sensor according to the present invention, FIG. 2 is a diagram illustrating a driving concept of an electric pot provided with an infrared temperature sensor according to the present invention, FIG. 3 is a conceptual diagram illustrating an electric pot provided with an infrared temperature sensor according to the present invention, and FIG. 4 is a diagram illustrating another embodiment of an electric pot provided with an infrared temperature sensor according to the present invention.

As illustrated in the drawings, an electric pot 10 provided with an infrared temperature sensor according to the present invention (hereinafter referred to as an electric pot for convenience of description) is an electric pot for heating water, and the electric pot 10 includes an electric pot body 20, a container member 30, a temperature sensing unit 40, and a display unit 50.

The electric pot body 20 is provided with a heating unit 21 and a control unit 22 controlling the heating unit 21 such that the heating unit 21 is turned on/off by signals of the control unit 22.

The heating unit 21 is provided at an upper portion of the electric pot body 20 and is formed of heating wire to heat the container member 30 contacting the heating unit.

As illustrated in FIG. 1, a guide tube 25 formed of metal material or synthetic resin material is fixed by fusion or adhesion to an upper portion of the heating unit 21 to prevent the inserted container member 30 from moving.

In this case, in addition to the heating wire, the heating unit 21 may use anything that is heated by electrical resistance or signals and may also use anything that heats filled water by radiating high-frequency waves to the container member 30.

A lower portion of the container member 30 is inserted into the guide tube 25 such that a bottom surface thereof contacts a top surface of the electric pot body 20, and it is heated by receiving heat from the heating unit 21 and is filled with water.

In this case, the container member 30 is formed of transparent glass material.

That is, since the container member 30 is formed of transparent glass material, an infrared temperature sensor that is the temperature sensing unit 40, which will be described below, may measure a temperature of the filled water by permeating the container member 30.

The temperature sensing unit 40 is installed at the electric pot body 20 to sense a temperature of the water filling the container member 30 and transmit a sense signal thereof to the control unit 22.

The control unit 22 receives and transmits the sense signal to the display unit 50 to display the temperature of the water, and when the temperature of the water becomes 100°C, the control unit 22 ends the driving of the heating unit 21.

The display unit 50 displays the temperature of the water by receiving a signal of the control unit 22 that has received the temperature of the water from the temperature sensing unit 40.

The temperature sensing unit 40 is an infrared temperature sensor sensing a temperature of the water filling the container member 30 and transmits a sense signal corresponding to the sensed temperature of the water to the control unit 22.

The electric pot body 20 is further provided with a set temperature maintaining unit 23 to maintain the boiled water at a set temperature. After the water of the container member 30 is boiled to 100°C, a water temperature setting value signal input to the set temperature maintaining unit 23 is transmitted to the control unit 22 to control the heating unit 21 to maintain the water at the set temperature.

That is, when the water is sterilized by being boiled to 100°C and then the water of a predetermined temperature is to be used, a user inputs a water temperature to the set temperature maintaining unit 23, a set temperature value signal is transmitted from the set temperature maintaining unit 23 to the control unit 22, and a water temperature signal is transmitted from the temperature sensing unit 40 to the control unit 22. When the temperature of the water is lower than the set temperature, the heating unit 21 is driven to heat the water to the set temperature, and when the temperature of the water is higher than the set temperature, the driving of the heating unit 21 is ended.

In this case, the electric pot body 20 may be provided with an input button unit 24 to turn on/off the heating unit 21 or to input the set temperature of the water to the set temperature maintaining unit 23.

## Claims

1. An electric pot for heating water which is provided with an infrared temperature sensor, the electric pot comprising:
an electric pot body comprising a heating unit, and a control unit controlling the heating unit;
a guide tube formed on a top surface of the electric pot body;
a container member inserted into the guide tube to be disposed at an upper portion of the electric pot body, and receiving heat from the heating unit;
a temperature sensing unit installed at the electric pot body to sense a temperature of water filling the container member; and a display unit receiving a signal from the control unit to display the temperature of the water,
wherein the guide tube is fixed at an upper portion of the heating unit to prevent the inserted container member from moving,
wherein the container member is formed of transparent glass material,
wherein the temperature sensing unit comprises an infrared temperature sensor sensing the temperature of the water filling the container member and transmits a sense signal corresponding to the sensed temperature of the water to the control unit.

2. The electric pot of claim 1, wherein the electric pot body further comprising a set temperature maintaining unit to maintain boiled water at a set temperature, and after the water of the container member is boiled to 100° C, the set temperature maintaining unit transmits an input water temperature setting value signal to the control unit to control the heating unit to maintain the water at the set temperature.

## Amended claims

### Amended claims in accordance with Rule 137(2) EPC.

1. An electric pot for heating water which is provided with an infrared temperature sensor, the electric pot comprising:
an electric pot body comprising a heating unit, and a control unit controlling the heating unit;
a guide tube formed on a top surface of the electric pot body;
a container member inserted into the guide tube to be disposed at an upper portion of the electric pot body, and receiving heat from the heating unit;
a temperature sensing unit installed at the electric pot body to sense a temperature of water filling the container member; and a display unit receiving a signal from the control unit to display the temperature of the water,
wherein the guide tube is fixed at an upper portion of the heating unit to prevent the inserted container member from moving,
wherein the container member is formed of transparent glass material,
wherein the temperature sensing unit comprises an infrared temperature sensor sensing the temperature of the water filling the container member and transmits a sense signal corresponding to the sensed temperature of the water to the control unit.

2. The electric pot of claim 1, wherein the electric pot body further comprising a set temperature maintaining unit to maintain boiled water at a set temperature, and after the water of the container member is boiled to 100° C, the set temperature maintaining unit transmits an input water temperature setting value signal to the control unit to control the heating unit to maintain the water at the set temperature.
